# EUROPEAN PATENT APPLICATION

(11) **EP 2 698 977 A1**
(43) Date of publication of application: **19.02.2014**
(21) Application number: 12771811.2
(22) Date of filing: 15.03.2012
(51) Int. Cl.: H04N 1/387, G06T 3/00

(54) **DATA TRANSMISSION DEVICE, METHOD FOR ADDING COPYRIGHT NOTICE, AND PROGRAM**

(30) Priority: 11.04.2011 JP 2011087081
(71) Applicant: NEC CASIO Mobile Communications, Ltd., Kawasaki-shi Kanagawa 211-8666 (JP)
(72) Inventor: KOYAMA, Hirohisa, Kawasaki-shi, Kanagawa 211-8666 (JP)
(74) Representative: Vossius & Partner
(86) International application number: PCT/JP2012/056667
(87) International publication number: WO 2012/140985

(57) **Abstract**

A data transmission device includes: a copyright-notice-requirement-information-storing unit that stores copyright-notice-requirement information indicating a correlation between a data transmission destination and whether a copyright notice is required; a transmission unit that transmits data to a transmission destination of the data; a copyright-notice-requirement-determining unit that determines whether to add a copyright notice to the data to be transmitted by the transmission unit, based on the transmission destination of the data and the copyright-notice-requirement information; and a copyright-notice-adding unit that adds a visible copyright notice to the data to be transmitted by the transmission unit upon the copyright-notice-requirement-determining unit determining that a copyright notice is to be added.

## Description

### TECHNICAL FIELD

The present invention relates to a data transmission device, a method for adding a copyright notice of the data transmission device, and a program.

### BACKGROUND ART

Data that are open to the public and loaded into a personal computer or the like, such as image data uploaded to a website such as a blog, are likely to be reproduced and used without permission. Therefore, in order to protect the copyright of data such as image data, an electronic watermark technique is proposed. The watermark technique is a technique for embedding specific information in the data. For example, by embedding copyright information in the data, it creates a trail enabling the source of the data to be traced.

Regarding this electronic watermark, a mobile telephone with an electronic camera according to Patent Document 1 is disclosed as an example. In this mobile telephone, signal processing is applied to the image signal of an object captured by an imaging unit in a signal processing and image data storage unit, which is then stored as image data. Then, an electronic-watermark-data-inserting unit reads the authentication information of the contract holder of the portable telephone from an authentication information storage unit, and embeds an electronic watermark (authentication information) in the image data.

By so doing, copyright data can be embedded in the image data without the user having to enter copyright data and store it in advance.

### [Prior Art Document]

### [Patent Document]

[Patent Document 1] Japanese Unexamined Patent Application, First Publication No. 2004-72316

### SUMMARY OF THE INVENTION

### Problem to be Solved by the Invention

However, an electronic watermark is a technique whereby specific information is embedded without affecting the content of data (for example, image indicated by image data and sound indicated by sound data). Accordingly, an electronic watermark is not likely to be noticed by a person accessing the data (for example, a person who views the image or a person who listens to the sound). As a result, it is difficult to obtain an effect of arousing the attention of the person who accesses the data and prevent it from being copied without permission or being used without permission.

On the other hand, if a visible copyright notice is added to the data such as by incorporating a copyright notice in the image, it visually arouses the attention of a person who accesses the data, so that an effect of making it difficult to be copied without permission or used without permission can be expected.

However, in this case, the operation for adding the visible copyright notice to the data, or the initial determination of whether to apply a copyright notice, becomes a burden on the person who opens the data to the public. For example, with respect to an image published in a blog opened to the public, incorporating a copyright notice is effective in preventing copying without permission and usage without permission. However, with respect to photo images transmitted to a close friend privately, it can be considered that containing a copyright notice is unsuitable and becomes an obstacle. Therefore, a person who transmits image data decides whether to add a copyright notice to the image depending on its use, and in the case where it is decided to add one, it is necessary to physically add a copyright notice. This operation becomes burdensome on the person who transmits the image data.

An exemplary object of the present invention is to provide a data transmission device, a method for adding a copyright notice of the data transmission device, and a program, which can solve the above-described problems.

### Means for Solving the Problem

A data transmission device according to one aspect of the present invention includes: a copyright-notice-requirement-information-storing unit that stores copyright-notice-requirement information indicating a correlation between a data transmission destination and whether a copyright notice is required; a transmission unit that transmits data to a transmission destination of the data; a copyright-notice-requirement-determining unit that determines whether to add a copyright notice to the data to be transmitted by the transmission unit, based on the transmission destination of the data and the copyright-notice-requirement information; and a copyright-notice-adding unit that adds a visible copyright notice to the data to be transmitted by the transmission unit upon the copyright-notice-requirement-determining unit determining that a copyright notice is to be added.

A method for adding a copyright notice according to one aspect of the present invention includes the steps of: transmitting data to a transmission destination of the data; determining whether to add a copyright notice to the data to be transmitted in the step of the transmission, based on the transmission destination of the data and copyright-notice-requirement information indicating a correlation between a data transmission destination and whether a copyright notice is required; and adding a visible copyright notice to the data to be transmitted by the transmission unit upon determining that a copyright notice is to be added in the step of the determination.

A program according to one aspect of the present invention is for causing a computer used as a data transmission device including a copyright-notice-requirement-information-storing unit storing copyright-notice-requirement information indicating a correlation between a data transmission destination and whether a copyright notice is required, and a transmission unit transmitting data a transmission destination of the data, to execute the steps of: determining whether to add a copyright notice to the data to be transmitted by the transmission unit, based on the transmission destination of the data and the copyright-notice-requirement information; and adding a visible copyright notice to the data to be transmitted by the transmission unit upon determining that a copyright notice is to be added in the step of the determination.

### Effect of the Invention

According to the present invention, it is possible to determine whether to add a copyright notice to the content (for example, an image) of transmission data and add a visible copyright notice based on the determination while avoiding a burden on a person who transmits the data.

### BRIEF DESCRIPTION OF THE DRAWINGS

FIG. 1 is a block diagram showing, schematically, the structure of the functional blocks of a portable terminal device according to one exemplary embodiment of the present invention.
FIG. 2 is an explanatory diagram showing an example in which the portable terminal device transmits blog data in the exemplary embodiment of the present invention.
FIG. 3 is an explanatory diagram showing an example in which the portable terminal device adds a copyright notice to an image in the exemplary embodiment of the present invention.
FIG. 4 is an explanatory diagram showing an example of copyright-notice-requirement information stored in an address storage unit in the exemplary embodiment of the present invention.
FIG. 5 is an explanatory diagram showing an example of a copyright notice data table stored in a copyright-notice-data-storing unit in the exemplary embodiment of the present invention.
FIG. 6 is a flow chart showing a procedure for the portable terminal device to generate a blog including a copyright notice and transmit it in the exemplary embodiment of the present invention.
FIG. 7 is a block diagram showing, schematically, the structure of the functional blocks of a data transmission device according to one exemplary embodiment of the present invention.

### EMBODIMENTS FOR CARRYING OUT THE INVENTION

### <First Exemplary Embodiment>

Hereunder is a description of exemplary embodiments of the present invention with reference to the drawings.

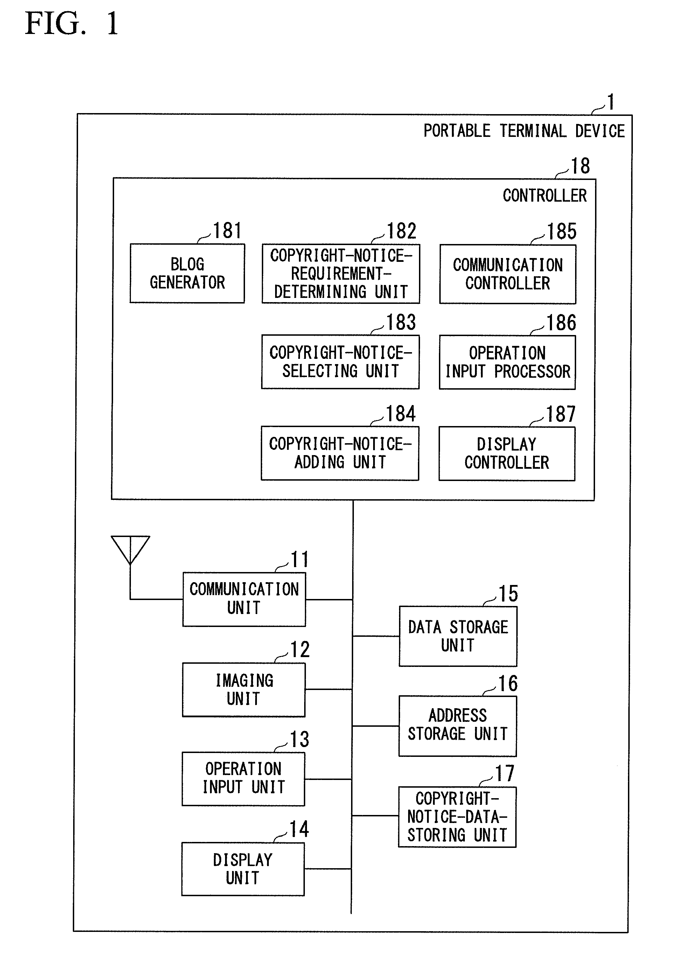

FIG. 1 is a block diagram showing, schematically, the structure of the functional blocks of a portable terminal device according to one exemplary embodiment of the present invention. In FIG 1, a portable terminal device 1 includes a communication unit (transmission unit) 11, an imaging unit 12, an operation input unit 13, a display unit 14, a data storage unit 15, an address storage unit (copyright-notice-requirement-information-storing unit) 16, a copyright-notice-data-storing unit 17, and a controller 18. The controller 18 includes a blog generator 181, a copyright-notice-requirement-determining unit 182, a copyright-notice-selecting unit 183, a copyright-notice-adding unit 184, a communication controller 185, an operation input processor 186, and a display controller 187.

The portable terminal device 1 includes a function of transmitting mail and a function of uploading data to a website. To be specific, a user of the portable terminal device 1 can open a blog to the public on the Internet by transmitting the blog data to a predetermined address on the Internet by email using the portable terminal device 1, or by accessing a predetermined webpage and uploading the blog data, for example. When transmitting this blog data by email or uploading it, the portable terminal device 1 determines whether to add a copyright notice to an image contained in the blog, and in the case where it is determined to be added, it performs a process for adding a copyright notice to the image.

Hereunder, adding a copyright notice to the content of data is referred to as adding a visible copyright notice to data. Adding a copyright notice to the content of data includes adding (combining) a copyright notice to an image indicated by the image data, or adding a copyright notice string to the text of text data.

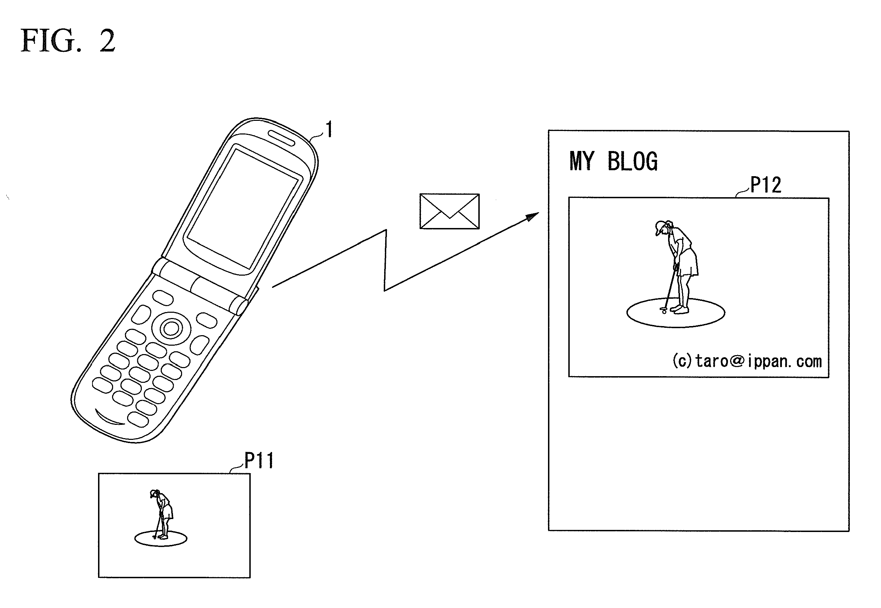

FIG. 2 is an explanatory diagram showing an example in which the portable terminal device 1 transmits blog data by electronic mail. In FIG. 2, the portable terminal device 1 transmits electronic mail to a predetermined server device on the Internet by generating electronic mail for a blog to which an image P11 is attached, and by transmitting it to a predetermined address. The server device that obtains the electronic mail transmitted from the portable terminal device 1 reads the blog data from the electronic mail and opens the blog to the public.

The portable terminal device 1 adds a copyright notice "(c) taro@ippann.com" to the image P11 contained in the blog, generates electronic mail, and transmits it. Accordingly, the copyright notice is added to the image P12 contained in the blog, which is open to the public.

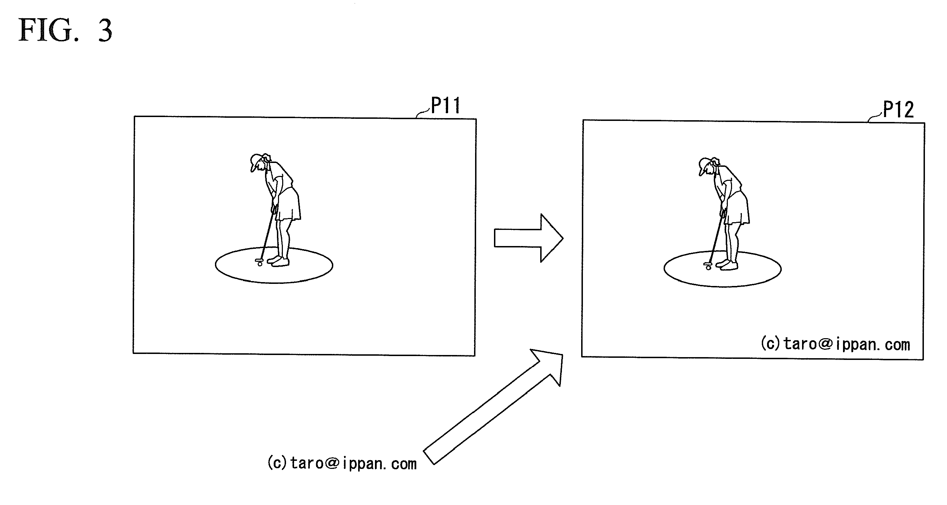

FIG. 3 is an explanatory diagram showing an example in which the portable terminal device 1 (copyright-notice-adding unit 184) adds a copyright notice to an image. In FIG 3, the copyright-notice-adding unit 184 adds (combines) a copyright notice "(c) taro@ippann.com" to the image P11 to be attached to the blog, and generates an image P12 with a copyright notice displayed.

By combining a copyright notice with the image to be attached to the blog in this manner, it is possible to make a viewer (a person who accesses the blog) of the image acknowledge the existence of the copyright notice, and furthermore, the existence of copyright. As a result, it can be expected that it is psychologically difficult for the viewer of the image to copy it without permission or to use it without permission.

Furthermore, in the case where the viewer of this image copies the image without permission and uses it without permission, in order to make it difficult to fmd out the source of the image it is necessary to perform image processing to remove the copyright notice. In this way, even from the point of increasing the time and effort of the person who copies the image without permission or uses it without permission, by combining the copyright notice with the image, it can be expected that it is difficult to copy the image without permission or to use it without permission.

The range of application of the present invention is not limited to the portable terminal device shown in FIG. 1. The present invention may be used for a range of equipment that transmits data that is visible and has a transmission destination address, such as a portable information terminal (Personal Digital Assistant), a smart phone (Smartphone), a personal computer (Personal Computer: PC), a tablet PC, a game machine, and the like.

Moreover, hereunder is a description of a case where the portable terminal device 1 generates a blog and transmits it. However, the range of application of the present invention is not limited to this case. The present invention may be used in a range of cases wherein data in which the content is visible is transmitted, such as a case wherein a still image or a moving image is submitted to an electronic bulletin board.

The communication unit 11 transmits and receives a range of data such as electronic mail data and web data according to the control by the communication controller 185.

The imaging unit 12 includes an imaging lens and an imaging element. The imaging unit 12 captures moving images and still images by converting light radiated onto the imaging element through the imaging lens into an electrical signal, and by further converting the electrical signal into digital image data.

The operation input unit 13 includes push buttons such as a numerical keypad, direction keys, decision buttons, and the like, and a touch panel (touch sensor) installed in the display screen of the display unit 14, for example. The operation input unit 13 receives a user's operation inputs, and outputs an electrical signal indicating the received operation input to the operation input processor 186.

The display unit 14 includes a display screen constituted by a liquid crystal display for example. The display unit 14 displays a range of images such as moving images, still images, and strings (text) according to the control by the display controller 187.

The data storage unit 15 stores a range of data such as moving image data, still image data, and text data in advance (that is before the portable terminal device 1 generates transmission data and transmits it). The data storage unit 15 is realized in part of the storage region of a storage device provided in the portable terminal device 1, for example.

For example, the data storage unit 15 stores image data of moving images and still images captured by the imaging unit 12. The user of the portable terminal device 1 can attach data stored in the data storage unit 15 to blog data when generating the blog. In particular, the user can attach visible data content such as a moving image indicated by moving image data, a still image indicated by still image data, and a string indicated by text data, which are stored in the data storage unit 15.

The address storage unit 16 stores copyright-notice-requirement information, which indicates the correlation between a transmission destination address such as an electronic mail address of a blog data transmission destination, and an access destination URL (Uniform Resource Locator) when the blog data is uploaded, and whether a copyright notice is required. The address storage unit 16 is realized in part of the storage region of a storage device provided in the portable terminal device 1, for example.

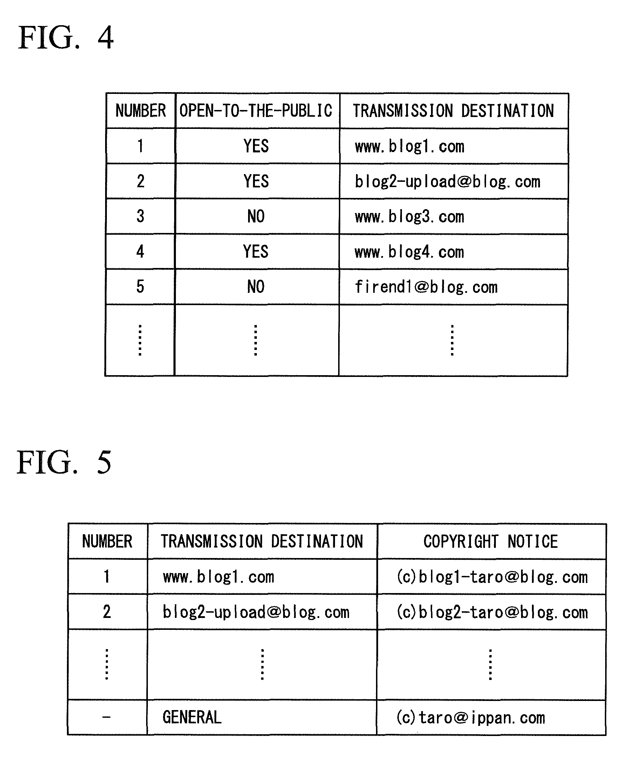

FIG. 4 is an explanatory diagram showing an example of copyright-notice-requirement information stored in the address storage unit 16.

In FIG. 4, the address storage unit 16 stores copyright-notice-requirement information in the form of a table.

In the column "transmission destination", transmission destination address information, such as electronic mail addresses and URLs, is stored.

In the column "Open to the public", open-to-the-public existence information is stored indicating whether or not the content (blog) of the transmission data is to be open to the public. A value "Yes" of the open-to-the-public existence information indicates that the blog is to be open to the public. A value "No" of the open-to-the-public existence information indicates that it is not to be open to the public.

For example, the URL "www.blog1.com" stored in the first line, the mail address "blog2-upload@blog.com" stored in the second line, and the URL "www.blog4.com" stored in the fourth line, are transmission destination addresses to register the blog data in a blog site where the blog is to be open to the public. The value of the open-to-the-public existence information in the first, second and fourth lines is "Yes". On the other hand, the URL "www.blog3.com" stored in the third line, and the mail address "friend@blog.com" stored in the fifth line, are transmission destination addresses to register the blog data in a blog site that only a specified small number of friends can access. The value of the open-to-the-public existence information in the third and fifth lines is "No".

In the column "number", the numbers of the lines in the copyright-notice-requirement information are stored.

The open-to-the-public existence information is used as information indicating whether a copyright notice is required. To be specific, the portable terminal device 1 (copyright-notice-requirement-determining unit 182), in the case where the value of the open-to-the-public existence information is "Yes", determines that a copyright notice is required to be added, and in the case where the value of the open-to-the-public existence information is "No", determines that a copyright notice is not required to be added.

In this manner, the address storage unit 16 stores information (copyright-notice-requirement information) indicating the correlation between the transmission destination address and whether a copyright notice is required, by storing transmission destination address information and open-to-the-public existence information for each line of the copyright-notice-requirement information.

The transmission destination address information stored in the column "transmission destination" is only required to be information whereby it can be determined whether the transmission destination of the blog data corresponds to the transmission destination indicated in the transmission destination address information.

For example, a plurality of addresses (electronic mail addresses or URLs) may be stored in one field of the "transmission destination" column. Moreover, data may be stored in the column "transmission destination" whereby the existence of matching can be determined by pattern matching such as "*@company.com" ("*" indicates a wildcard (arbitrary string)).

Furthermore, the address storage unit 16 may store transmission destination address information that indicates only transmission destinations where the blog is open to the public as open-to-the-public existence information. In this case, when generating transmission data and transmitting it, in the case where the transmission destination address of the blog corresponds to transmission destination address information contained in the open-to-the-public existence information, the portable terminal device 1 determines that a copyright notice is required to be added, and in the case where there is no correspondency, determines that a copyright notice is not required to be added. The case where the transmission destination address of the blog corresponds to transmission destination address information contained in the open-to-the-public existence information is a case where the transmission destination address of the blog corresponds to any of the addresses contained in the open-to-the-public existence information, for example, or a case where the transmission destination address of the blog matches pattern matching data contained in the open-to-the-public existence information.

In this case, the address storage unit 16 does not need to store data in the "open-to-the-public" column. Moreover, it is possible to reduce the amount of transmission destination address information stored in the address storage unit 16 compared with the case where both information of transmission destinations at which the content of transmission data is open to the public and information of transmission destinations at which it is not open to the public are stored. Accordingly, it is possible to reduce the storage capacity of the address storage unit 16.

Alternatively, the arrangement may be such that the address storage unit 16 stores transmission destination address information indicating only transmission destinations at which the content of transmission data is not open to the public, as open-to-the-public existence information. In this case, when generating transmission data and transmitting it, contrary to the above-described, the portable terminal device 1 determines that a copyright notice is not required to be added when the transmission destination address of the blog corresponds to transmission destination address information contained in the open-to-the-public existence information, and when there is no correspondency determines that a copyright notice is required to be added.

In this case also, the address storage unit 16 does not need to store data in the "open-to-the-public" column. Moreover, it is possible to reduce the amount of transmission destination address information stored in the address storage unit 16 compared with the case where both information of transmission destinations at which the content of transmission data is open to the public and information of transmission destinations at which it is not open to the public are stored. Accordingly, it is possible to reduce the storage capacity of the address storage unit 16.

The copyright-notice-data-storing unit 17 stores a plurality of copyright notice data in advance (that is before the portable terminal device 1 generates transmission data and transmits it). The copyright-notice-data-storing unit 17 is realized in part of the storage area of a storage device provided in the portable terminal device 1, for example.

FIG. 5 is an explanatory diagram showing an example of a copyright notice data table stored in a copyright-notice-data-storing unit 17.

In FIG 5, in the column "transmission destination", transmission destination address information (that is, as described in FIG 4, electronic mail addresses, URLs, or pattern matching data) is stored. In the column "copyright notice", copyright notice data is stored. In the column "number", the numbers of the lines in the copyright notice data table are stored.

The transmission destination address information stored in the column "transmission destination" and the copyright notice data stored in the column "copyright notice" are associated for each of the lines in the copyright notice data table.

For example, when the portable terminal device 1 accesses the URL "www.blog1.com" stored in the first line of the copyright notice data table and uploads blog data, it adds the copyright notice "(c) blogl-taro@blog.com" indicated in the copyright notice data stored in the same first line, to the image attached to the blog.

When the portable terminal device 1 transmits blog data to the electronic mail address "blog2-upload@blog.com" stored in the second line of the copyright notice data table, it adds the copyright notice "(c) blog2-taro@blog.com" indicated in the copyright notice data stored in the same second line, to the image attached to the blog.

In the case where blog data is transmitted to an address that does not correspond to any of the transmission destination address information stored in the copyright notice data table, the portable terminal device 1 adds the copyright notice "(c) taro@blog.com" indicated in the copyright notice data stored in the last line, to the image attached to the blog.

The content of the copyright notice data stored in the copyright-notice-data-storing unit 17 is not limited to a string. It may be an image such as a logo or the like.

The controller 18 executes an application for performing a range of processes such as processing electronic mail, voice communication, and the like, and controls each of the units of the portable terminal device 1 according to the execution of the application. The controller 18 is realized by a central processing unit (CPU) provided in the portable terminal device 1 reading a program from the storage device provided in the portable terminal device 1, and executing it, for example.

The blog generator 181 is a processing unit (function block) indicating a blog generation function in which the controller 18 implements a blog generation application (blog generation tool), and executes it. The blog generator 181 generates blogs according to a user's operation inputs.

The copyright-notice-requirement-determining unit 182 determines whether to add a copyright notice to blog data transmitted by the communication unit 11, based on the transmission destination of the blog data and the copyright-notice-requirement information stored in the address storage unit 16.

To be specific, the copyright-notice-requirement-determining unit 182 firstly obtains the transmission destination address (electronic mail address or URL) of the blog data generated by the blog generator 181. For example, a communication controller 185 generates transmission data in which blog data generated by the blog generator 181 and a transmission destination address specified by the user are stored, and the copyright-notice-requirement-determining unit 182 reads the transmission destination address from the transmission data.

Then, the copyright-notice-requirement-determining unit 182 retrieves copyright-notice-requirement information stored in the address storage unit 16 using the transmission destination address read as a key, and obtains open-to-the-public existence information associated with the transmission destination address. In the case where the obtained open-to-the-public existence information is "Yes", the copyright-notice-requirement-determining unit 182 determines that a copyright notice is to be added. On the other hand, in the case where the obtained open-to-the-public existence information is "No", the copyright-notice-requirement-determining unit 182 determines that a copyright notice is not to be added.

The copyright-notice-selecting unit 183 selects any of the copyright notice data stored in the copyright-notice-data-storing unit 17, based on the transmission destination of the blog data transmitted by the communication unit 11. To be specific, the copyright-notice-selecting unit 183 firstly obtains the transmission destination address of the blog data generated by the blog generator 181. Then, the copyright-notice-requirement-determining unit 182 retrieves the copyright notice data table stored in the copyright-notice-data-storing unit 17, using the transmission destination address read as a key, and obtains (selects) the copyright notice data associated with the transmission destination address.

The copyright-notice-adding unit 184 adds the copyright notice indicated by the copyright notice data selected by the copyright-notice-selecting unit 183, to the image (or visible data content such as a string) attached to the blog generated by the blog generator 181.

The arrangement may be such that the copyright-notice-adding unit 184 adds a copyright notice in a predetermined location such as the top right or bottom right of the image.

Alternatively, the copyright-notice-adding unit 184 may analyze the image, detect a region (region seen as a blank space such as a background color) where there is a lot of similar color, and the brightness is almost uniform, and add a copyright notice to the region. For example, the copyright-notice-adding unit 184 detects a region where the dispersion (for example, standard deviation) in pixel values (for example, brightness values of each of the colors red, blue, and green) is in a predetermined range, and adds a copyright notice to that region.

In this manner, by the copyright-notice-adding unit 184 detecting a region seen as a blank space and adding a copyright notice, it is possible to reduce the degree of disfigurement to the image.

The copyright-notice-adding unit 184 may add a copyright notice of a predetermined size (for example, font size) to the image. Alternatively, the copyright-notice-adding unit 184 may add a copyright notice of a size dependent on the size of the image, such as adding a copyright notice of a size 10 percent of the width of the image, for example.

The communication controller 185 controls the communication unit 11, and receives and transmits a range of data.

The operation input processor 186 determines the operation input received by the operation input unit 13, based on the electrical signal output by the operation input unit 13, and generates information indicating the operation input. The information indicating the operation input that the operation input processor 186 generates is a user's input to the processing that the controller 18 performs, such as an input to an application that the controller 18 performs. For example, the blog generator 181 generates a blog according to the operation input generated by the operation input processor 186.

The display controller 187 controls the display unit 14, and makes it display a range of images on the display screen of the display unit 14.

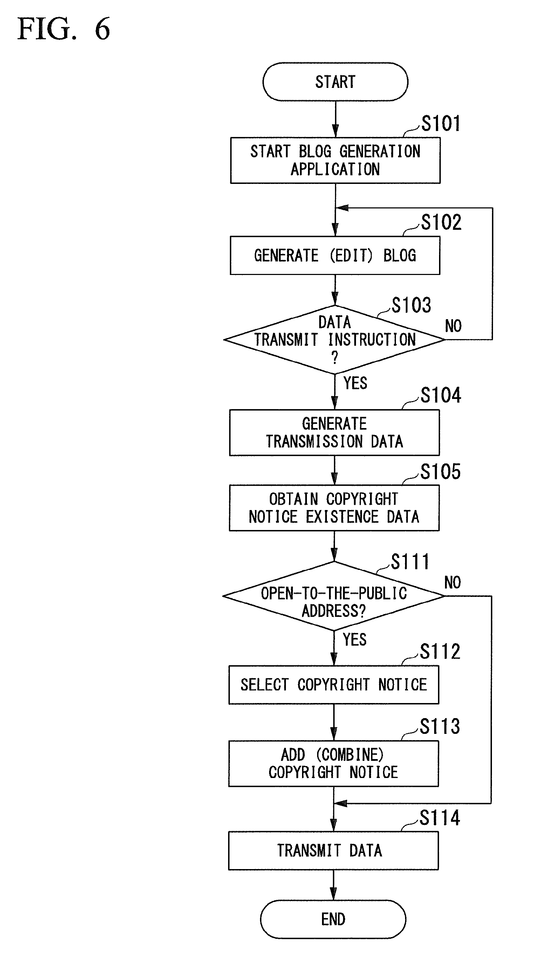

Next is a description of the operation of the portable terminal device 1 with reference to FIG. 6.

FIG. 6 is a flow chart showing a procedure for the portable terminal device 1 to generate a blog incorporating a copyright notice and transmit it. The portable terminal device 1 starts the processing of FIG. 6 when the operation input unit 13 receives an operation input instructing it to start a blog generation application.

In the process of FIG. 6, firstly, the controller 18 sets the blog generator 181 to a run state by executing a blog generation application (step S101). Then, the blog generator 181 generates and edits the blog according to the operation input received by the operation input unit 13, and makes the display unit 14 display the blog via the display controller 187 (step S 102).

Then, the operation input processor 186 waits for a user's operation input to the operation input unit 13, and determines whether the operation input is an instruction to transmit the blog data (step S103).

In the case where the operation input processor 186 determines that there is no instruction to transmit the blog data (step 103: No), the processing returns to step S102. Next, the blog generator 182 edits the blog according to the operation input received by the operation input unit 13, and makes the display unit 14 display the blog via the display controller 187.

On the other hand, in step S103, in the case where the operation input processor 186 determines that there is an instruction to transmit the blog data (step S103: Yes), the communication controller 185 generates transmission data in which the blog data generated by the blog generator 181 is stored (step S104). A transmission destination address (email address or URL) that is specified by the user is included in the transmission data generated by the communication controller 185.

Next, the copyright-notice-requirement-determining unit 182, as described above, reads the transmission destination address from the transmission data generated by the communication controller 185, retrieves copyright-notice-requirement information, and obtains open-to-the-public existence information associated with the read transmission destination address (step S105). The copyright-notice-requirement-determining unit 182 determines whether to add a copyright notice according to the obtained open-to-the-public existence information (step S111).

In the case where the copyright-notice-requirement-determining unit 182 determines that a copyright notice is to be added (step S111: Yes), the copyright-notice-selecting unit 183, as described above, reads the transmission destination address from the transmission data generated by the communication controller 185 and by obtaining copyright notice data associated with the read transmission destination address, selects a copyright notice (step S112).

Then, the copyright-notice-adding unit 184 adds (combines) the copyright notice indicated by the copyright notice data selected by the copyright-notice-selecting unit 183, to visible data content such as an image or text, which is attached to the blog stored in the transmission data (step S113).

Then, the communication controller 185 instructs the communication unit 11 to transmit the transmission data (step S 114).

Afterwards, the processing of FIG 6 is terminated.

On the other hand, in step S111, in the case where the copyright-notice-requirement-determining unit 182 determines that a copyright notice is not to be added (step S111: No), the processing proceeds to step S114.

As described above, the copyright-notice-requirement-determining unit 182 determines whether to add a copyright notice depending on the transmission destination address of the blog data. In the case where the copyright-notice-requirement-determining unit 182 determines that a copyright notice is to be added, the copyright-notice-adding unit 184 adds a copyright notice to an image or the like that is attached to the blog. As a result, it is possible to determine whether to apply a copyright notice to the content of the transmission data while avoiding a burden on a person (user) who transmits the data, and to add a visible copyright notice based on the determination.

For example, in the case where the portable terminal device 1 uploads a blog to a site where the blog is open to the public, it adds a copyright notice to an image or the like, which is attached to the blog, which makes it difficult to copy the image or the like without permission or to use it without permission. On the other hand, in the case where the portable terminal device 1 uploads a blog to a site open to only a specific small number of friends, it does not add a copyright notice to an image or the like, which avoids the inconvenience of a copyright notice.

Furthermore, the copyright-notice-selecting unit 183 selects copyright notice data according to the transmission destination address of the blog data, and the copyright-notice-adding unit 184 adds the copyright notice selected by the copyright-notice-selecting unit 183 to an image or the like. As a result, it is possible to select a copyright notice automatically depending on the site where a blog is open.

Moreover, the copyright-notice-adding unit 184 detects a region in which the dispersion in pixel color values is in a predetermined range, and adds a copyright notice to that region. By so doing, it is possible to reduce the degree of disfigurement to the image when adding the copyright notice.

Furthermore, the portable terminal device 1 has copyright notice data inside it (copyright-notice-data-storing unit 17). As a result, it is possible for a user to access copyright notice data easily and edit it.

The data storage unit 15 may store data generated within the portable terminal device 1 separately from other data, and the copyright-notice-adding unit 184 may add a copyright notice only to data generated in the portable terminal device 1.

For example, the data storage unit 15 stores each data stored in itself associated with a flag showing the distinction between the data generated in the portable terminal device 1 and other data. The value of a flag associated with the data generated in the portable terminal device 1, such as data of an image captured by the imaging unit 12 and image data of a picture drawn using a drawing tool of the portable terminal device 1, is set to "1". On the other hand, the value of a flag associated with the other data is set to "0". The controller 18 sets the value of the flag when writing data to the data storage unit 15, for example.

When attaching an image to a blog, the blog generator 181 attaches it to the blog data in a form in which the image data and flag are associated. The copyright-notice-adding unit 184 adds a copyright notice to an image indicated by the image data with respect only to image data whose flag value is set to "1" among image data attached to the blog data.

As a result, the copyright-notice-adding unit 184 can select an image generated by the portable terminal device 1 (that is, the user of the portable terminal device 1) itself, that is an object image for which the user of the portable terminal device 1 claims copyright, and adds a copyright notice.

In the case where the portable terminal device 1 stores a profile of the user, the copyright-notice-adding unit 184 may use the user name or the electronic mail address registered in the profile, or information in which the information is processed (for example, a string in which "(c)" is added to the beginning of the user name) as a copyright notice.

In this case, the burden of the user can be reduced since the user of the portable terminal device 1 does not need to register a copyright notice in the portable terminal device 1.

The copyright-notice-requirement-determining unit 182 may determine whether to add a copyright notice with reference to copyright-notice-requirement information registered in a network such as the Internet.

In this case, a plurality of users can share the copyright-notice-requirement information, and the copyright-notice-requirement-determining unit 182 can determine whether to add a copyright notice based on the latest copyright-notice-requirement information without the user of the portable terminal device 1 taking any time and effort to register and update the copyright-notice-requirement information.

Similarly, the copyright-notice-selecting unit 183 may obtain copyright notice data with reference to a copyright notice data table registered in a network such as the Internet.

In this case, a plurality of users can share the copyright notice data table, and the copyright-notice-selecting unit 183 can obtain copyright notice data based on the latest copyright notice data table without the user of the portable terminal device 1 taking any time and effort to register and update the copyright notice data table.

The applicability of the present invention is not limited to a device that generates transmission data by itself, such as the above-mentioned portable terminal device 1.

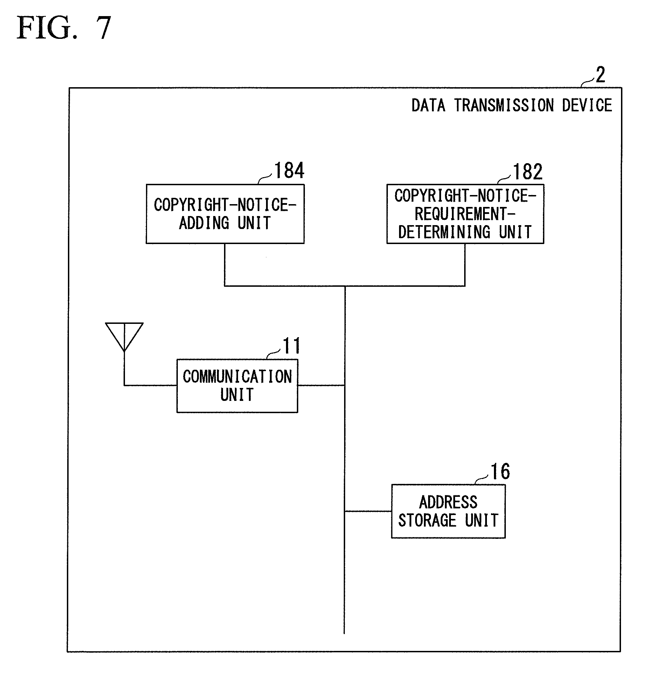

FIG. 7 is a block diagram showing, schematically, the structure of the functional blocks of a data transmission device 2 according to an exemplary embodiment of the present invention. In the figure, the data transmission device 2 includes a communication unit (transmission unit) 11, an address storage unit (copyright-notice-requirement-information-storing unit) 16, a copyright-notice-requirement-determining unit 182, and a copyright-notice-adding unit 184.

The data transmission device 2 may generate transmission data by itself and transmit it similarly to the portable terminal device 1 (FIG 1). Alternatively, the data transmission device 2 may be connected to a personal computer, for example, and transmit transmission data generated by the personal computer. In either case, the data transmission device 2 determines whether to add a copyright notice according to the transmission destination address of the transmission data. In the case where the data transmission device 2 determines that a copyright notice is to be added, it adds a copyright notice to visible data content contained in the transmission data, and transmits it.

In this data transmission device 2, the copyright-notice-requirement-determining unit 182 reads a transmission determination address from transmission data generated by the data transmission device 2 itself, or transmission data obtained from outside. Next, the copyright-notice-requirement-determining unit 182 determines whether to add a copyright notice similarly to the case of the portable terminal device 1, based on the read transmission destination address and the copyright-notice-requirement information stored in the address storage unit 16.

When the copyright-notice-requirement-determining unit 182 determines that a copyright notice is to be added, the copyright-notice-adding unit 184 adds (combines) a predetermined copyright notice, to an image or the like contained in the transmission data.

Afterwards, the communication unit 11 transmits the transmission data.

In this manner, the copyright-notice-requirement-determining unit 182 determines whether to add a copyright notice according to the transmission destination address of the transmission data. When the copyright-notice-requirement-determining unit 182 determines that a copyright notice is to be added, the copyright-notice-adding unit 184 adds a copyright notice to an image or the like, which is contained in the transmission data. Accordingly, it is possible to determine whether to apply a copyright notice to the content of the transmission data and to add a visible copyright notice based on the determination while avoiding a burden on a person (user) who transmits the data.

The arrangement may be such that a program that realizes all or part of the functions of the portable terminal device 1 or the data transmission device 2 is recorded in a computer readable recording medium, and the processing of each part is performed by making a computer read a program stored in this recording medium, and execute it. A "computer system" mentioned here includes hardware such as an OS, peripheral equipment, and the like.

"Computer system" also includes a website provider environment (or display environment) in the case where it uses the www system.

"Computer readable recording medium" means a flexible disc, a magneto-optical disc, a portable medium such as a ROM, a CD-ROM or the like, or a memory device such as a hard disc or the like built into a computer system. Furthermore, "computer readable recording medium" also includes anything that retains a program actively for a short time, such as a communication line in the case where a program is transmitted via a network such as the Internet or a communication line such as a telephone line, and anything that retains a program for a certain time, such as a volatile memory inside of a computer system, being a server or a client in that case. The above-described program may realize part of the aforementioned functions, or furthermore, it may realize the aforementioned functions by combination of programs that have already been stored in the computer system.

As above, the exemplary embodiments of the present invention are described in detail with reference to the drawings. However, specific constructions are not limited to the exemplary embodiments, and any design change or the like that does not depart from the scope of the invention is included.

This application is based upon and claims the benefit of priority from Japanese patent application No. 2011-087081, filed April 11, 2011, The disclosure of which is incorporated herein in its entirety by reference.

### INDUSTRIAL APPLICABILITY

The present invention may be used for a data transmission device, a method for adding a copyright notice of the data transmission device, and a program. According to the present invention, it is possible to add a visible copyright notice based on determination while avoiding a burden on a person who transmits data.

### Reference Symbols

- 1: Portable terminal device
- 2: Data transmission device
- 11: Communication unit
- 12: Imaging unit
- 13: Operation input unit
- 14: Display unit
- 15: Data storage unit
- 16: Address storage unit
- 17: Copyright-notice-data-storing unit
- 18: Controller
- 181: Blog generator
- 182: Copyright-notice-requirement-determining unit
- 183: Copyright-notice-selecting unit
- 184: Copyright-notice-adding unit
- 185: Communication controller
- 186: Operation input processor
- 187: Display controller

## Claims

1. A data transmission device comprising:
a copyright-notice-requirement-information-storing unit that stores copyright-notice-requirement information indicating a correlation between a data transmission destination and whether a copyright notice is required;
a transmission unit that transmits data to a transmission destination of the data;
a copyright-notice-requirement-determining unit that determines whether to add a copyright notice to the data to be transmitted by the transmission unit, based on the transmission destination of the data and the copyright-notice-requirement information; and
a copyright-notice-adding unit that adds a visible copyright notice to the data to be transmitted by the transmission unit upon the copyright-notice-requirement-determining unit determining that a copyright notice is to be added.

2. The data transmission device according to claim 1, further comprising:
a copyright-notice-data-storing unit that stores a plurality of copyright notice data; and
a copyright-notice-selecting unit that selects one of the plurality of copyright notice data stored in the copyright-notice-data-storing unit, based on the transmission destination of the data to be transmitted by the communication unit,
wherein the copyright-notice-adding unit adds a visible copyright notice indicated by the copyright notice data selected by the copyright-notice-selecting unit, to the data to be transmitted by the transmission unit.

3. The data transmission device according to claim 1 or claim 2, wherein the copyright-notice-adding unit detects a region where dispersion of pixel value colors is in a predetermined range within an image indicated by the data be transmitted by the transmission unit, and adds the copyright notice to the region.

4. A method for adding a copyright notice comprising the steps of:
transmitting data to a transmission destination of the data;
determining whether to add a copyright notice to the data to be transmitted in the step of the transmission, based on the transmission destination of the data and copyright-notice-requirement information indicating a correlation between a data transmission destination and whether a copyright notice is required; and
adding a visible copyright notice to the data to be transmitted by the transmission unit upon determining that a copyright notice is to be added in the step of the determination.

5. A program for causing a computer used as a data transmission device comprising a copyright-notice-requirement-information-storing unit storing copyright-notice-requirement information indicating a correlation between a data transmission destination and whether a copyright notice is required, and a transmission unit transmitting data a transmission destination of the data, to execute the steps of:
determining whether to add a copyright notice to the data to be transmitted by the transmission unit, based on the transmission destination of the data and the copyright-notice-requirement information; and
adding a visible copyright notice to the data to be transmitted by the transmission unit upon determining that a copyright notice is to be added in the step of the determination.
